# EUROPEAN PATENT SPECIFICATION

(11) **EP 1 006 524 B1**
(45) Date of publication and mention of the grant of the patent: **22.02.2012**
(21) Application number: 99123075.6
(22) Date of filing: 22.11.1999
(51) Int. Cl.: G11B 19/28

(54) **Monitoring and adjusting a motor current in a disk data drive to optimize a disk rotation speed**
Überwachung und Einstellung des Motorstroms eines Datenplattenlaufwerks zur Optimierung der Plattenumdrehungsgeschwindigkeit
Contrôle et réglage du courant du moteur d'un appareil d'entrainement de disque d'emmagasinage de données pour l'optimalisation de la vitesse de rotation du disque

(30) Priority: 03.12.1998 EP 98403032
(43) Date of publication of application: 07.06.2000
(73) Proprietor: Thomson Licensing, 92130 Issy-les-Moulineaux (FR)
(72) Inventor: Kaaden, Jürgen, 78052 Villingen-Schwenningen (DE)
(74) Representative: Thies, Stephan

(56) References cited:
- EP-A- 0 821 356
- EP-A- 0 833 328
- WO-A-98/27549
- US-A- 5 612 933
- US-A- 5 815 478
- STAN S G ET AL: "ADAPTIVE-SPEED ALGORITHMS FOR CD-ROM SYSTEMS" IEEE TRANSACTIONS ON CONSUMER ELECTRONICS, vol. 42, no. 1, 1 February 1996 (1996-02-01), pages 43-51, XP000583556

## Description

The present invention relates to a disk data drive and more precisely to optimizing a disk rotation speed in such a disk data drive.

A disk data drive uses a disk shaped data carrier to read and / or write data. Examples of disk data drives may be optical, opto-magnetic or magnetic data drives. Typically such disk data drives allow to remove and insert optical (Compact Disks, Digital Versatile Disks), opto-magnetic and/or magnetic disks. The inserted disk is rotated inside the drive by means of a motor to which a motor current is fed. Once the disk is rotating data may be read from and / or written to the disk using appropriate reading and / or writing means.

A rate of data reading and / or writing, i.e., a quantity of information per unit of time read from and / or written to the disk is dependent on a disk rotation speed. More precisely the greater the disk rotation speed the greater the achievable rate of data reading and / or writing. Due to imperfections of the disk or of the disk data drive a high disk rotation speed may lead to vibrations or other problems which eventually result in data reading and / or writing errors. Therefore the disk rotation speed needs to be adjusted as high as possible but in a way that a tolerable number of reading and / or writing errors occurs.

Solutions according to the invention for monitoring and adjusting a motor current in a disk data drive such to optimise a rotational speed of a disk actuated by a motor with said motor current are defined by the appended independent claims. Advantageous refinements of these solutions are defined by the appended dependent claims. According to a first solution of the invention a method for monitoring and adjusting a motor current in a disk data drive such to optimise a rotational speed of a disk actuated by a motor with said motor current comprises the steps of
a) driving the motor at a certain value of the rotational speed,
b) measuring the value of the motor current,
c) comparing the measured value of the motor current to a nominal value of the motor current for said rotational speed,
d) keeping the value of the rotational speed constant if the measured value of the motor current deviates from the nominal value of the motor current, and
e) else changing the value of the rotational speed and continuing with step b).

This has the advantage that usually the motor of such device is controlled to run at a certain rotational speed. In this case it is sufficient to add the possibility to measure the motor current in order to perform the inventive method. No changes of control devices or control strategy is necessary.

According to a second solution of the invention a method for monitoring and adjusting a motor current in a disk data drive such to optimise a rotational speed of a disk actuated by a motor with said motor current comprises the steps of
a) driving the motor at a certain value of the motor current,
b) measuring the value of the rotational speed,
c) comparing the measured value of the rotational speed to a nominal value of the rotational speed for said motor current,
d) keeping the value of the motor current constant if the measured value of the rotational speed deviates from the nominal value of the rotational speed, and
e) else changing the value of the motor current and continuing with step b).

This has the advantage that the motor current may not exceed a maximum allowable value because it is regulated according to a predefined strategy. This leads to a limitation of energy consumption as well as to reduced wear of the device and thus to an enlarged lifetime.

Both solutions have the advantage that the optimum rotational speed of a disk can be determined independent of the fact whether the disk can be read by the device or if it is unreadable. That means, directly after inserting the disk into the device the method according to the invention may be performed and delivers the optimum value of the rotational speed for said disk. That means, it is not necessary to adapt certain parameters of the device functions to the properties of the disk before the optimum rotational speed can be determined.

According to a first variant of the first solution it is started with a low value of the rotational speed and the value of the rotational speed is kept constant if the measured value of the motor current exceeds the nominal value of the motor current, else the value of the rotational speed is increased. This has the advantage that the method is started under safe conditions, that means under conditions, which are most likely below the optimum value of the rotational speed. The device works without problems, e. g. such caused by eccentricity or bad flatness, under these conditions. The value of the rotational speed is increased until the optimum, the maximum acceptable value of the rotational speed is reached.

Similarly, according to a first variant of the second solution it is started with a low value of the motor current and the value of the motor current is kept constant if the measured value of the rotational speed falls below the nominal value of the rotational speed, else the value of the motor current is increased.

According to second variant of the first solution the method is started with a maximum value of the rotational speed and the value of the rotational speed is kept constant if the measured value of the motor current falls below the nominal value of the motor current, else the value of the rotational speed is decreased. This has the advantage that in case of high quality disks, which exhibit only very small eccentricity, the optimum value might be reached much more quickly, because for these disks the optimum value of the rotational speed most likely does not deviate much from the maximum value. If, in average, more high quality disks are used than low quality disks, this variant of the inventive method most likely leads quickly to the desired result.

Similarly, according to a second variant of the second solution the method is started with a maximum value of the motor current and the value of the motor current is kept constant if the measured value of the rotational speed exceeds the nominal value of the rotational speed, else the value of the motor current is decreased.

According to a third variant of the first solution the method is started with a certain medium value of the rotational speed, which is afterwards increased if the measured value of the motor current falls below the nominal value of the motor current, or decreased if the measured value of the motor current exceeds the nominal value of the motor current. The further steps are similar as described above. This variant of the method has the advantage that the medium value with which the method is started may be chosen to be a value which most likely equals the optimum value. This value might be determined by averaging the maximum acceptable values for a big number of different disks. In this case only very few steps will have to be performed to reach the optimum value. This means that the device, in average, will be available for the user very quickly after being turned on or after a new disk has been inserted. Similarly, according to a third variant of the second solution the method is started with a certain medium value of the motor current, which is afterwards decreased if the measured value of the rotational speed falls below the nominal value of the rotational speed, or increased if the measured value of the rotational speed exceeds the nominal value of the rotational speed.

Advantageously the value of the rotational speed or the motor current is kept constant if the actual value of the rotational speed or the motor current equals a maximum allowable value of the rotational speed or the motor current of the device independent of whether the criteria for the optimum value of the rotational speed or the motor current are already reached or not. This also has the advantage not to exceed the maximum allowable or desirable motor current or rotational speed, respectively. In case of a very good disk, exhibiting nearly no eccentricity and having good flatness, and in case of optimum conditions of the device the conditions of the method set for determination of optimum speed might not be reached before the maximum speed of the device is reached. By cutting off the increase of the rotational speed or the motor current, respectively, wear is reduced and thus lifetime of the device is increased.

Measuring the value of the rotational speed or the motor current advantageously includes measuring several samples of the rotational speed or the motor current and generating a mean value therefrom. Using a mean value has the advantage that errors caused by erroneously detected extremely high or extremely low values do not have negative influence on the method. A further advantage lies in the fact that measurement can be started even before a stable state after switching to a different value of the motor current or the rotational speed, respectively, is reached. Otherwise it would be necessary to wait until such stable state is surely reached. A further advantage lies in the fact that if the control characteristic is very fast, which includes that deviations around the mean value may exist for a certain prolonged time, even these deviations or oscillations are filtered out by generating the mean value.

According to a variant of the invention the value of the motor current or the rotational speed is reduced about a certain amount before being kept constant. This has the advantage that the criteria for no longer increasing the value of the motor current or the rotational speed may well lie a little bit above the optimum value, as this value is reduced afterwards about said predefined certain amount. This means that the steps for changing the value of the motor current or the rotational speed y might be taken relatively large because after having reached the criteria for optimum value the actual value is reduced for example about half the value about which the motor current or the rotational speed was changed before. The large steps for changing the value of the motor current or the rotational speed allow to even more quickly reach the optimum value.

The inventive method is performed each time a different disk is inserted into the disk data drive. This has the advantage that each disk which might have different eccentricity or flatness than the disk before and each insertion operation which also might cause an eccentric mounting of the disk with regard to the device, that means each situation in which the eccentricity most likely changes, is coped with and the value of the motor current or the rotational speed is adapted accordingly. In other cases, for example if the device was turned off but the disk was kept, or in case that just a long time passed without access to the disk usually no big changes in the eccentricity of the combination of disk and device take place. The number of times the method is performed is such reduced to a reasonable but not too high number.

Advantageously the method is also performed again if a certain condition is met. Such condition may be a certain time having elapsed after the last performance of the method. This has the advantage that changes, which might happen during operation but without having changed the disk, are compensated for. For example, the device may have been exhibited to mechanical shocks, e.g. if it is used at a portable device, for example in a laptop computer or in an automotive system. Such mechanical shocks may lead to a certain displacement of the disk with regard to its mounting which also may cause a changed eccentricity. Another condition may advantageously be the turning on of the device independent of whether the disk was changed or the same disk is kept. Here, too, external shocks or other influences might have changed the interconnection and thus the actual eccentricity.

Preferably the nominal value of the motor current for a certain rotational speed is the maximum advisable value of said motor current corresponding to said value of said rotational speed. This means that the nominal value can be taken as threshold value. Comparison is such made easy. Another possibility, which is a little bit less easy to implement, is that the ideal value for the motor current is taken as the nominal value. In this case the comparison would mean that an actual value lying within a certain range around the ideal value would be taken as correct and only values lying outside this allowable range would be taken as indication of excessive deviation from the optimum value.

Similarly, preferably the nominal value of the rotational speed for a certain motor current is the maximum advisable value of said rotational speed corresponding to said value of said motor current.

It is to be understood that changes or amendments lying within the capability of the skilled person do also lie within the scope of the invention as defined by the appended claims.

In the following at least one way of carrying out the invention will be described in detail using examples and referring to the drawings, wherein
- Fig. 1: contains a flowchart illustrating a method according to the invention,
- Fig. 2: contains a flowchart illustrating a method for averaging,
- Fig. 3: contains a flowchart illustrating a method for normalizing,
- Fig. 4: contains a flowchart illustrating still another aspect of a method according to the invention,
- Fig. 5: shows a schematic view of a device for performing a method according to the invention,
- Fig. 6: shows a diagram motor current over rotational speed,
- Fig. 7: contains a flowchart illustrating a method for averaging,
- Fig. 8: contains a flowchart illustrating a method according to the invention,
- Fig. 9: contains a flowchart illustrating a method for averaging, and
- Fig.10: shows a flowchart illustrating a method for normalizing.

A relationship between motor current fed to the motor rotating the disk in the disk data drive, and a disk rotation speed may be expressed as a function which attributes determined values of motor current to determined disk rotation speeds. This function may be given as a curve or a table including the determined values in pairs of motor current and rotation speed values. The values delivered by the function may be called nominal motor current and rotation speed values.

It may be possible to use a motor current limitation to find a highest possible disk rotation speed, i.e. an optimized speed at which reading and / or writing errors occur in a tolerable number only. In a first place the motor current is set at a maximum value and the disk rotation speed is measured. If the disk rotation speed is smaller than an expected nominal disk rotation speed value for the maximum value of current according to the established function or if the expected nominal disk rotation speed value is obtained but may not be held constant then a new lower value of motor current is set and thus the disk rotation speed reduced. This is repeated until the disk rotation speed value becomes and remains substantially equal to the expected nominal disk rotation speed value for the value of the motor current used. This way of adjusting the current and measuring the disk rotation speed is based on the observation that if a higher motor current is required to achieve the expected nominal disk rotation speed than in the established function, then the disk or the disk / motor assembly has some imperfections, e.g. eccentricity or bad flatness of disk, which become a problem at the adjusted value of the motor current and cause a less efficient motor current consumption. The imperfections eventually cause reading and / or writing errors at the adjusted value of the motor current. A drawback of this method is that a relatively high current needs to be adjusted right at the beginning of finding the optimized disk rotation speed.

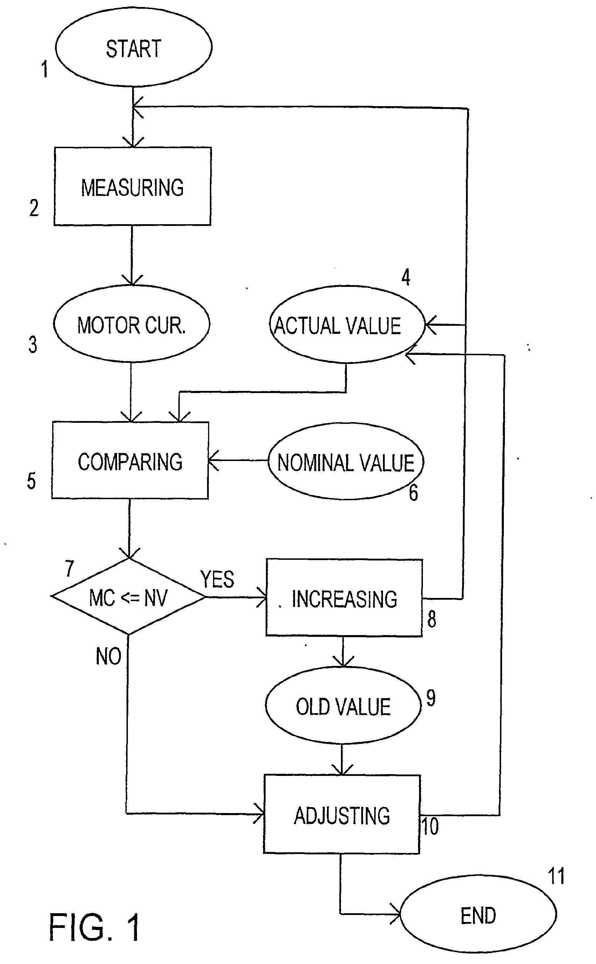

In Fig. 1 a flowchart illustrates a method in which after a start 1 a value of motor current fed to the motor is measured in 2 to obtain a value 3 of motor current for an actual value of the disk rotation speed 4. A disk rotation speed and more precisely the actual value of the disk rotation speed 4 may be measured in many different ways, e.g., using data read from the disk or using tachometric information of the disk motor as is well known from a person skilled in the art. The value of motor current 3 may typically be obtained using a resistor and appropriate measuring equipment as is well known by a person skilled in the art.

A comparing 5 compares the value of motor current 3 with a nominal value of motor current 6 which should be flowing at the actual value of the disk rotation speed 4, i.e. with a nominal value of motor current obtained from the above mentioned established function. As explained above the nominal value of motor current may be obtained for example out of a table (not shown) or a curve (not shown). Other ways of obtaining the nominal value 6 are not excluded.

A case study 7 checks whether the value of the motor current 3 is substantially equal to the nominal value 6. If the case study 7 returns a positive result (YES) then an increasing 8 increases the disk rotation speed to a new actual value of disk rotation speed and the measuring 2 is initiated again using the new actual value of disk rotation speed in the comparing 5 to find a new nominal value of motor current. Just before increasing the disk rotations speed to the new actual value, the actual value of disk rotation speed is stored as old speed value in 9.

If the case study 7 reveals negative (NO), i.e., the value of the motor current 3 is greater than the nominal value 6, an adjusting 10 uses the old speed value stored in 9, this value having previously been stored, and adjusts the disk rotation speed to the old speed value. At this point the method comes to an end 11. The adjusting 10 in fact results in a reducing of the motor current value which effectively reduces the disk rotation speed to a value at which possible imperfections do not affect the disk data drive anymore.

The described method allows to have an optimized disk rotation speed for any disk inserted in the disk data drive.

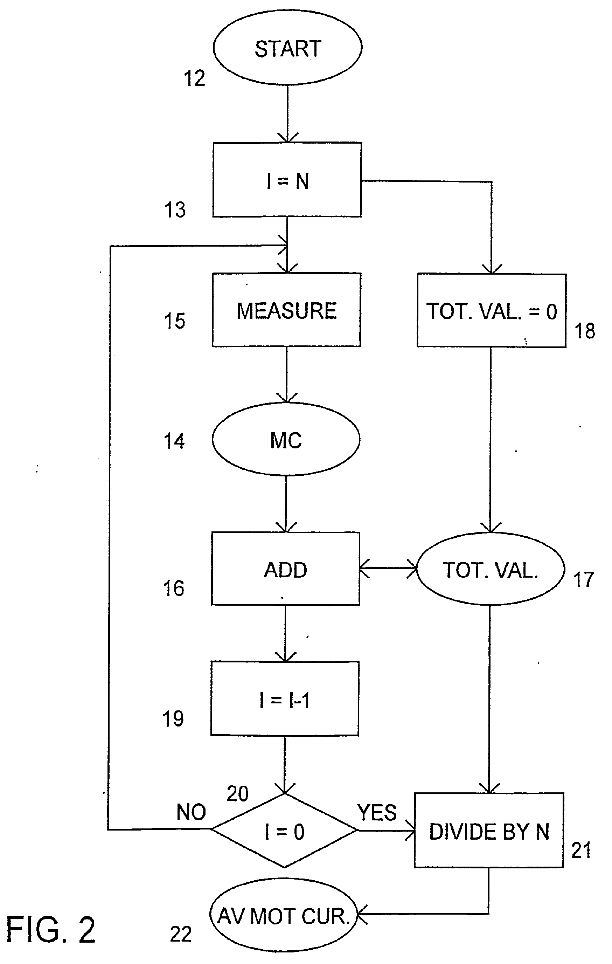

The measuring 2 may be realized as an average of a plurality of measures. Referring to Fig. 2 a start initiates a measuring in which a counter I is set to I=N in 13. A value of motor current 14 is obtained from a current measure 15 and added in 16 to a total measure value 17, the latter having been set equal to 0 by a reset 18 after start 12. In 19 the counter I is decreased by 1 by attributing I=I-1 and if in case study 20 I is not equal to 0 (NO) then the measuring 15 in undertaken again. If on the contrary the case study 20 reveals that I=0 (YES) then the total value 17 is divided by N in a dividing 21 to obtain an averaged motor current 22.

Other ways of averaging measures of motor current may well be used instead of the one described in connection with Fig. 2.

The established function between nominal values of motor current and disk rotation speeds may be stored in the disk data drive as nominal values. In order to take into account effects of for example an aging motor bearing on these nominal values, a normalization of the established function may be performed regularly. This way aging effects of the bearings may be taken into account. The normalization may for example be realized in a test mode during which the motor is rotated at several rotation speeds like 500, 1000, 1500... rpm without a disk in the drive, and the value of motor current is measured at each speed. Offset values between the measured values of motor currents and nominal values stored, obtained by operating a subtraction of the two latter, are used to modify the stored nominal motor current values, e.g. by adding the offset values to the nominal values. Hence an influence from aging components of the disk data drive may be eliminated.

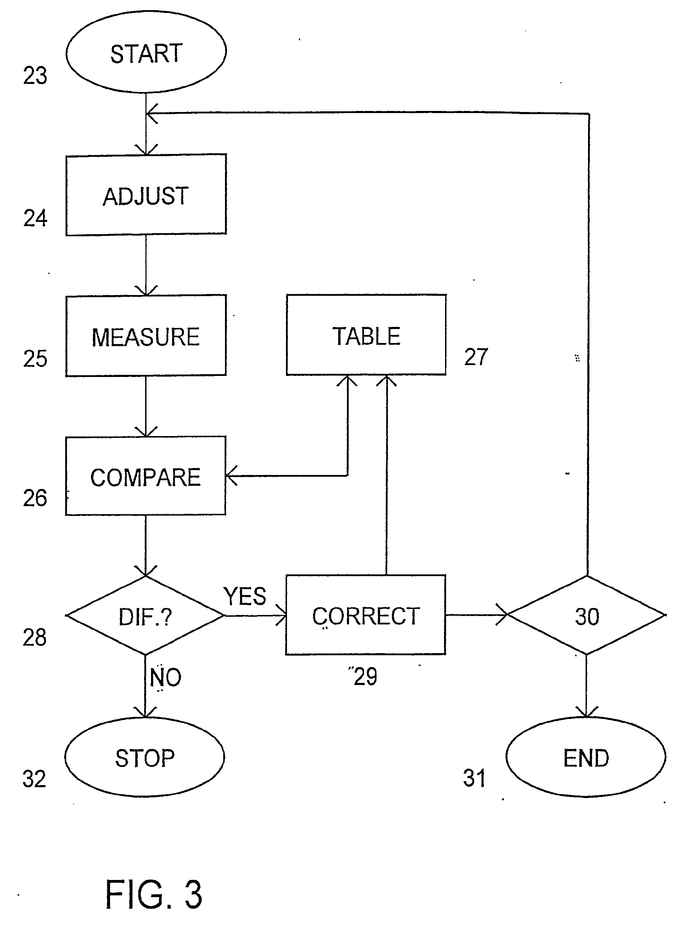

Referring now to Fig. 3 a start 23 initiates a method for normalizing in a data drive during which no disk is driven by the drive motor. A first determined rotation speed of the motor is adjusted in 24 followed by a measurement of the motor current in 25 in order to obtain a first value of the motor current. The latter is compared in 26 with a first nominal value of motor current extracted from a table 27 which contains values of nominal motor current associated to values of rotation speeds. If in case study 28 the first value and the first nominal value of motor current appear to be different (YES) then a correcting 29 of the nominal values stored in table 27 is undertaken and a second determined rotation speed is adjusted in 24.

A case study 30 checks if the adjusted rotation speed is equal to a final rotation speed value and ends the normalizing method if this is the case. This way a series of rotation speed values may be tested until the final rotation speed value has been checked.

If in case study 28 the first value and the first nominal value appear to be substantially equal (NO) then the normalization method is stopped in 32. This means that the nominal values of motor current need not be changed.

The methods described to this point adjust a rotation speed and measure a motor current which is subsequently compared to a nominal value of motor current. Another example of realization of the invention instead comprises adjusting a motor current value and measure a disk rotation speed which is subsequently compared to a nominal value of disk rotation speed.

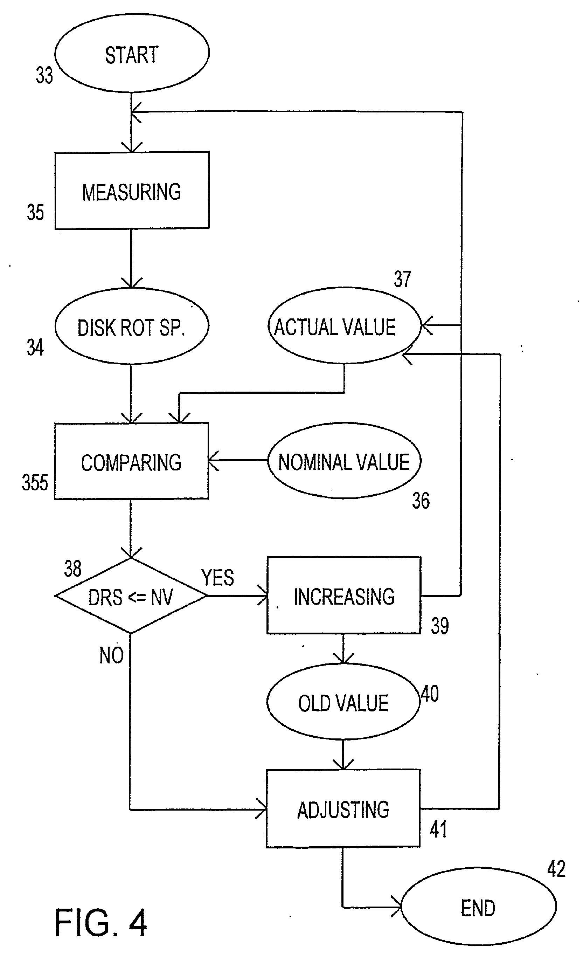

Referring now to Fig. 4. a method is started in 33 and a value of disk rotation speed 34 is measured in 35. A comparing 355 compares the disk rotation speed 34 with a nominal value of disk rotation speed 36 which one would expect for an actual value of the motor current 37 flowing through the drive motor.

If in a case study 38 the value of the disk rotation speed 34 and the nominal value of disk rotation speed 36 are found to be substantially equal (YES) then an increasing 39 of the motor current to a new actual value is undertaken, thus increasing the disk rotation speed. The latter is again measured in 35. At the issue of the increasing 39 the actual value of motor current is stored as old current value in 40. If the case study 38 reveals the value of the disk rotation speed 34 to be smaller (NO) than the nominal value of disk rotation speed 36, then an adjusting 41 adjusts a value of the motor current to the old current value 40 and the method ends in 42.

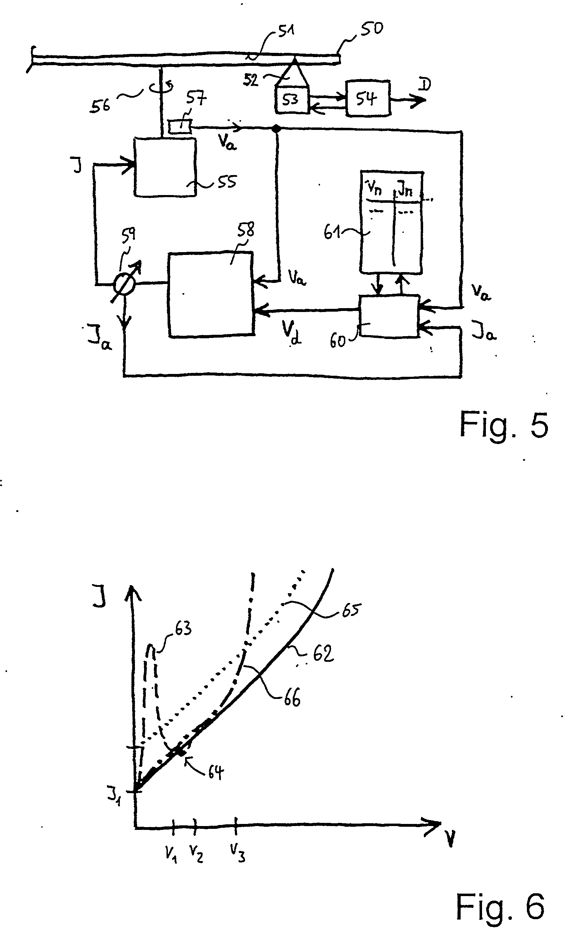

Figure 5 shows a diagrammatical view of a device for performing a method according to the invention. A disk 50 is shown as data carrier in cross-sectional view. Data is stored on the disk in a data carrying layer 51. Data carrying layer 51 is scanned by a beam of light 52, being produced and received by an optical pick-up 53. Optical pick-up 53 is controlled by and sends electrical signals to a control unit 54. Control unit 54 provides data D to be reproduced. Working of this part of the device is known to those skilled in the art and is thus not described in detail here.

Disk 50 is mounted to and driven by a disk motor 54. Disk motor 54 rotates the disk 50 which is indicated by arrow 56. The rotational speed vₐ which is also named the number of rotations is measured by a rotation sensor 57. The actual rotational speed signal vₐ is fed to a disk speed controller 58 which also receives a desired rotational speed signal v_{d}. Disk speed controller 58 provides a control signal to control the disk motor 54 upon which a disk motor driver, not further described here, provides an electric current I to disk motor 54. An amperemeter 59 provides for measuring the actual disk motor current Iₐ which signal is fed to a comparison unit 60. Comparison unit 60 also receives the actual rotational speed signal vₐ and compares both values to respective pairs of nominal rotational speed vₙ and nominal disk motor current In stored in a memory 61 depending on the result of the comparison according to the inventive method. Comparison unit 60 sets the desired rotational speed v_{d} which is supplied to the disk speed controller 58.

Figure 6 shows a diagram indicating motor current I over rotational speed v. Line 62 shows the relationship of disk motor current I for different rotational speeds v in a standard situation. The curve starts for low rotational speeds approximately linearly and shows a higher increase or non-linear behaviour for larger rotational speeds v. Line 62 indicates the stable condition. In contrast thereto dashed line 63 indicates the starting behaviour for increasing the rotational speed from a low speed to a higher speed v₂. The disk motor current increases sharply short after the desired rotational speed signal v_{d} was increased. The disk motor current I also decreases sharply when the motor is already accelerated and approaches v₂ and it most likely falls below line 62, see indication of arrow 64, before the final speed v₂ is reached. That means, if the rotational speed ᵥ was increased very slowly, the I(v) characteristic would closely follow line 62, whereas in reality, when acceleration to the new desired rotational speed v_{d} is performed a characteristic similar to the one indicated by dashed lines 63 occurs. As in this case the actual motor current Iₐ and the actual rotational speed vₐ do not necessarily lie on line 62 as long as the system has not again reached a stable state, comparison unit 60 should not start to do the comparison in order not to get incorrect results. That means comparison unit 60 should only start to compare after a stable state has been reached. According to one aspect of the invention a mean value of the actual values for vₐ and/or Iₐ is generated in order to overcome shortcomings from starting the comparison even before stable state has been reached.

Dotted line 65 shows, as an example, how the normal characteristic indicated by line 62 might change in case of mechanical resistances e. g. caused by friction or dissipation of or at the disk motor 55 or other mechanically or electrical impacts on the system. The adjusting method according to the invention makes it possible to identify such deviation from the standard behaviour. In this case the nominal data vₙ and In stored in memory 61, which usually complied to line 62 are amended accordingly and corrected nominal values vₙ and In are stored to memory 61. In case of the more linear shift of line 62 to dotted line 64 it might be possible to just measure one point and to calculate all other points from the measured deviation. However, in case of non-linearity of the deviation it is desirable to do a measurement and a correction for each pair of nominal values vₙ and In, for example for each dot of dotted line 65. Dash-dotted line 66 shows the I(v) relation in case that a disk 50 exhibiting eccentricity is used in the device. For low speeds, as indicated by v₁ or v₂, dash-dotted line 66 shows nearly the same characteristic as line 64 but for increasing speeds it deviates therefrom. Approximately starting with speed v₃ the motor current increases extremely with increasing rotational speed as the high eccentricity causes a high need and thus a high loss of energy. For the example of dash-dotted line 66 the device would be adapted to the maximum speed v₃ until a different disk is used.

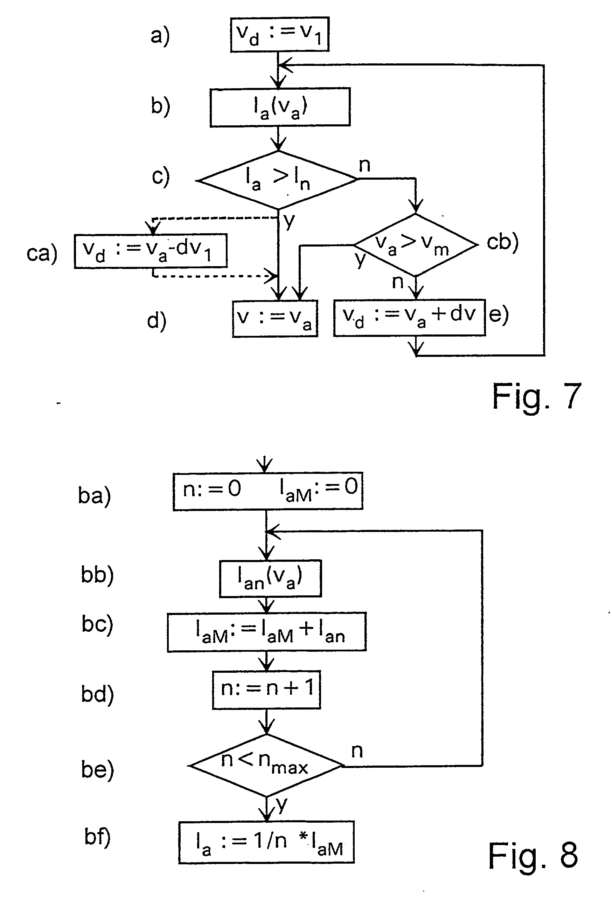

Figure 7 shows a flowchart illustrating a method for monitoring and adjusting motor current I according to the invention. In step a) the desired rotational speed v_{d} is set to an initial value v₁. In step b) the actual disk motor current Iₐ for the actual rotational speed value vₐ is measured. In step c) a comparison of the actual disk motor current Iₐ for the actual rotational speed vₐ to the nominal disk motor current In corresponding to the same rotational speed vₐ is done. In case that the measured actual value Iₐ exceeds the nominal value In the actual rotational speed vₐ is kept as the disk motor rotational speed v in step d). If the measured value Iₐ does not exceed the nominal value In it is branched to step e). In step e) the desired rotational speed v_{d} is increased e.g. by adding a value dv to the actual rotational speed vₐ. It is then returned to step b).

The optional step ca) which is to be performed, if desired, after a positive result in step c) is indicated in addition in Fig. 7. In step ca) the desired rotational speed is set to a lower value than the actual rotational speed vₐ, for example by reducing the actual rotational speed vₐ by a difference dv1.

Another additional step cb), which is to be performed after a negative result of step c) is also indicated in Fig. 7. Here it is checked, whether the actual rotational speed vₐ equals or exceeds a maximum rotational speed vₙ for the device. In case of a positive outcome, it is branched to step d). That means that the rotational speed is not increased to higher values than the maximum rotational speed vₙ set for the device.

Fig. 8 shows a flowchart illustrating a method for averaging the measured value. These steps would replace step b) of Fig. 7. In step ba) a counting value n and a mean actual value of disk motor current I_{aM} are reset to zero. In step bb) an n-th value of actual motor current Iₐₙ for the actual rotational speed vₐ is measured. In step bc) a new value for actual mean current I_{aM} is generated by adding the former actual mean value I_{aM} and the actually measured value Iₐₙ. In step bd) the counting value n is increased by 1. In step be) the counting value is compared to a maximum counting value nₘₐₓ. In case the maximum value is not reached it is returned to step bb), else step bf) is performed. In step bf) the actual disk motor current Iₐ is set to be 1/n of the actual mean value of the disk motor current I_{aM}.

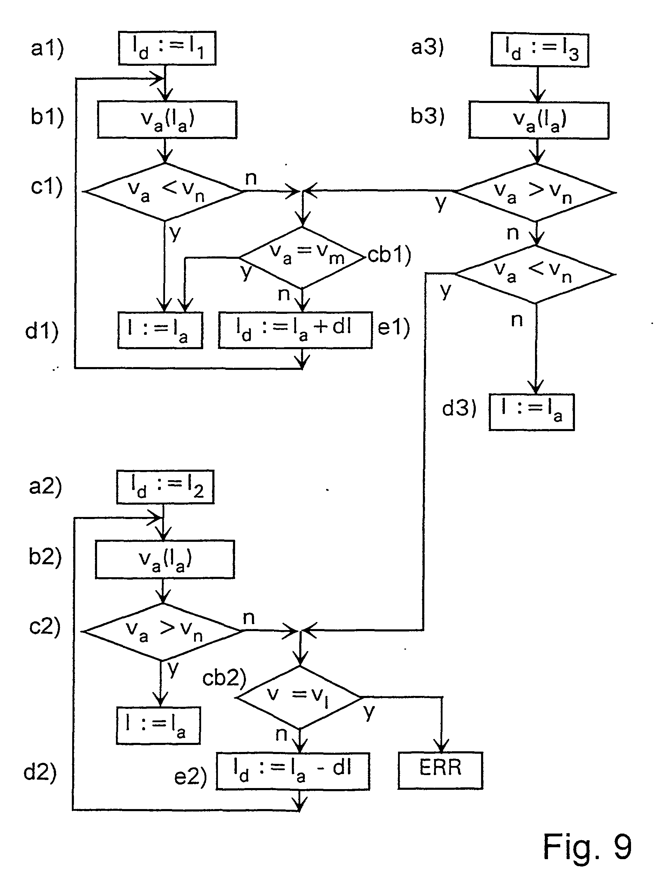

Fig. 9 shows a flowchart illustrating a further example of an inventive method. In this example the disk motor current I is set and the actual rotational speed vₐ is measured and compared to the nominal rotational speed vₙ corresponding to the actual disk motor current Iₐ. The upper left part of Fig. 9 shows a case in which it is started with a low value of the disk motor current I1 in step a1). In step b1) the actual rotational speed vₐ is measured. In step c1) the actual rotational speed vₐ is compared to the nominal rotational speed vₙ and the motor current I is kept constant in case that vₐ is smaller than vₙ. Otherwise steps cb1) and e1), being similar to step cb) and e) of Fig. 7, are carried out. In step cb1) it is indicated the sign "equals 2", however, it is to be understood that also for rotational speeds vₐ exceeding vₙ it is branched to step d1).

In the lower part of Fig. 9 it is shown an example wherein it is started with a high value for the disk motor current I₂ in step a2) which current is successively decreased in step e2) by a difference value of the disk motor current dI. Steps b2), c2) and d2) are similar to the respective steps described above, except that in step c2) it is checked whether the actual rotational speed vₐ exceeds the nominal rotational speed vₙ. In step cb2) the actual rotational speed vₐ is compared to a lowest acceptable rotational speed vₗ. If vₐ equals or falls below this minimum rotational speed vₗ an error message is generated. Such a low rotational speed vₗ is one which usually does not occur. In case the actual rotational speed is lower than vₗ some error in the device must have happened, for example the disk may be mechanically blocked so that the disk motor 55 cannot rotate or can only rotate at an extremely low speed. In this case it is of no use to proceed further.

In the upper right part of Fig. 9 it is shown an example where it is started with a certain medium value of the disk motor current I₃ in step a3). The corresponding actual rotational speed vₐ is measured in step b3) and it is continued with step e2) in case the actual rotational speed vₐ exceeds the nominal rotational speed vₙ corresponding to disk motor current I3. If it falls below that value it is continued with step e2). In case that the rotational speed vₐ assumes the nominal rotational speed vₙ the actual disk motor current Iₐ is kept in step d3).

It is to be noted that not every advantageous feature is described for all the exemplary embodiments. However, it lies within the scope of the invention, to combine all advantages features or efficient amendments to any other solution of the invention.

Although the example of Fig. 9 is directed to control the disk motor 55 to assume a certain disk motor current I, it is obvious that a similar method may well be carried out for control regarding rotational speed v.

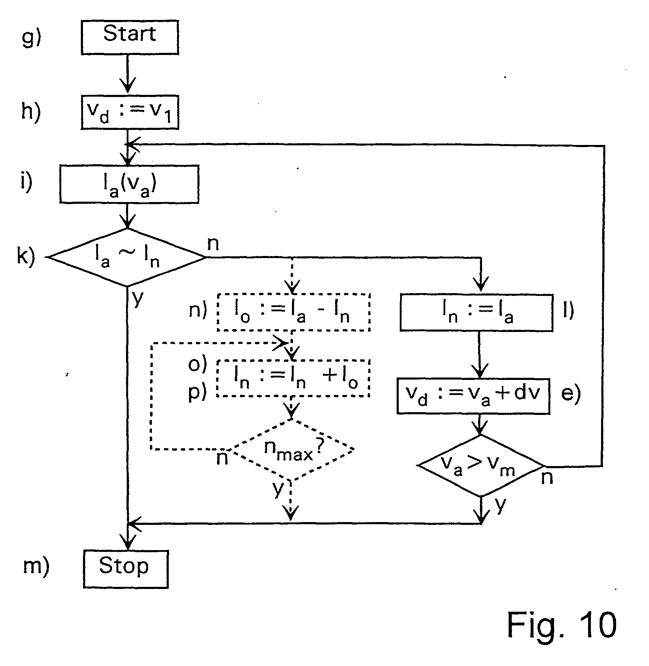

Fig. 10 shows a flowchart with regard to a method for normalizing nominal values of motor current In for determined rotational speeds vₐ. The method starts at step g) with mounting a defined load to the device. In case of the example the defined load means that no disk is loaded. In step h) a desired rotational speed v_{d} is set to an initial value vₗ. In step i) the actual motor current Iₐ needed to drive a disk motor 55 at rotational speed vₐ corresponding to v_{d} is measured. In step k) is this checked whether actual current Iₐ lies within a certain range around the nominal motor current In for rotational speed vₐ. If that is the case, the disk is stopped in step m) and the normalizing procedure is ended. Otherwise the nominal value In, stored in a memory, is set to assume the value of actual motor current Iₐ. In step e) the rotational speed is increased and it is returned to step i). This is repeated until the maximum speed is reached. In this case the method ends with step m).

An alternative method is shown by dashed lines. In step n) an offset current Iₒ is determined by subtracting the nominal current In from the actual current Iₐ. In steps o) and p) all stored nominal values In are replaced by the offset value Iₒ added to the old values In. After all values have been replaced the procedure is stopped with step n). The described examples of methods according to the invention may particularly be used in optical disk drives in which relatively high rotation speeds of optical disks are desired but may not necessarily be achieved for any optical disk inserted since many optical disk have some kind of manufacturing imperfection. Such optical disk drives include for example DVD-ROM and DVD-RAM drives.

## Claims

1. Method for monitoring and adjusting a motor current (I) in a disk drive to optimise a rotational speed (v) of a disk (50) driven by a motor (55) being driven with said motor current (I), the method comprising the steps of:
a) driving the motor (55) at a certain value (vₐ) of the rotational speed (v),
b) measuring the value (Iₐ) of the motor current (I),
c) comparing the measured value (Iₐ) of the motor current (I) to a nominal value (In) of the motor current (I) for said value (vₐ) of said rotational speed (v),
d) keeping the value (vₐ) of the rotational speed (v) constant if the measured value (Iₐ) of the motor current deviates from the nominal value (In) of the motor current,
e) else changing the value (vₐ) of the rotational speed (v) and continuing with step b).

2. Method according to claim 1, wherein
- in step a) it is started with a low value (v₁) of the rotational speed (v),
- in step d) the value (vₐ) of the rotational speed (v) is kept constant if the measured value (Iₐ) of the motor current exceeds the nominal value (Iₙ) of the motor current, and
- in step e) the value (vₐ) of the rotational speed (v) is increased.

3. Method according to claim 1, wherein
- in step a) it is started with a maximum value (v₂) of the rotational speed (v),
- in step d) the value (vₐ) of the rotational speed (v) is kept constant if the measured value (Iₐ) of the motor current falls below the nominal value (In) of the motor current, and
- in step e) the value (vₐ) of the rotational speed (v) is decreased.

4. Method according to claim 1, wherein
- in step a) it is started with a medium value (v₃) of the rotational speed (v),
- if the comparison of step c) shows that the measured value (Iₐ) of the motor current exceeds the nominal value (Iₙ) of the motor current then in step e) the value (vₐ) of the rotational speed (v) is decreased,
- if the comparison of step c) shows that the measured value (Iₐ) of the motor current falls below the nominal value (Iₙ) of the motor current then in step e) the value (vₐ) of the rotational speed (v) is increased,
- else the value of the rotational speed (v) is kept constant.

5. Method according to anyone of the preceding claims, **characterized in that** the value of the rotational speed (v) is kept constant if the actual value (vₐ) of the rotational speed equals a maximum value (vₘ) of the rotational speed (v) of the device.

6. Method according to anyone of the preceding claims, wherein measuring the value of the motor current (Iₐ) includes measuring several samples (Iₐₙ) of the motor current (I) and generating a mean value therefrom.

7. Method according to anyone of the preceding claims, wherein in step d) the value of the rotational speed (v) is reduced about a certain amount (dv) before being kept constant.

8. Method according to anyone of the preceding claims, **characterized in that** the nominal value (In) of the motor current (1) for a certain value (vₐ) of the rotational speed is the maximum advisable value of the motor current (I) for said certain value of said rotational speed (v).

9. Method for monitoring and adjusting a rotational speed (v) in a disk drive to optimise a motor current (I) of a disk (50) driven by a motor (55) with said rotational speed (v), the method comprising the steps of:
a) driving the motor (55) at a certain value (Iₐ) of the motor current (I),
b) measuring the value (vₐ) of the rotational speed (v),
c) comparing the measured value (vₐ) of the rotational speed (v) to a nominal value (vₙ) of the rotational speed (v) for said value (Iₐ) of said motor current (I),
d) keeping the value (Iₐ) of the motor current (I) constant if the measured value (vₐ) of the rotational speed deviates from the nominal value (vₙ) of the rotational speed,
e) else changing the value (1ₐ) of the motor current (I) and continuing with step b).

10. Method according to claim 9, wherein
- in step a) it is started with a low value (I₁) of the motor current (I),
- in step d) the value (Iₐ) of the motor current (I) is kept constant if the measured value (vₐ) of the rotational speed falls below the nominal value (vₙ) of the rotational speed, and
- in step e) the value (Iₐ) of the motor current (I) is increased.

11. Method according to claim 9, wherein
- in step a) it is started with a maximum value (I₂) of the motor current (I),
- in step d) the value (Iₐ) of the motor current (I) is kept constant if the measured value (vₐ) of the rotational speed exceeds the nominal value (vₙ) of the rotational speed, and
- in step e) the value (Iₐ) of the motor current (I) is decreased.

12. Method according to claim 9, wherein
- in step a) it is started with a medium value (I₃) of the motor current (I),
- if the comparison of step c) shows that the measured value (vₐ) of the rotational speed falls below the nominal value (vₙ) of the rotational speed then in step e) the value (Iₐ) of the motor current (I) is decreased,
- if the comparison of step c) shows that the measured value (vₐ) of the rotational speed exceeds the nominal value (vₙ) of the rotational speed then in step e) the value (Iₐ) of the motor current (I) is increased,
- else the value of the motor current (I) is kept constant.

13. Method according to anyone of claims 9 to 12, **characterized in that** the value of the motor current (I) is kept constant if the actual value (Iₐ) of the motor current equals a maximum value (Iₘ) of the motor current (I) of the device.

14. Method according to anyone of claims 9 to 13, wherein measuring the value of the rotational speed (vₐ) includes measuring several samples (vₐₙ) of the rotational speed (v) and generating a mean value therefrom.

15. Method according to anyone of claims 9 to 14, wherein in step d) the value of the motor current (I) is reduced about a certain amount (dI) before being kept constant.

16. Method according to anyone of claims 9 to 15, **characterized in that** the nominal value (vₙ) of the rotational speed (v) for a certain value (Iₐ) of the motor current is the maximum advisable value of the rotational speed (v) for said certain value of said motor current (I).

## Patentansprüche

1. Verfahren zum Überwachen und Einstellen eines Motorstroms (I) in einem Plattenlaufwerk zum Optimieren einer Drehzahl (v) einer Platte (50), die durch einen Motor (55) angetrieben wird, der mit dem Motorstrom (I) angesteuert wird, wobei das verfahren die folgenden Schritte umfasst:
a) Ansteuern des Motors (55) bei einem bestimmten Wert (vₐ) der Drehzahl (v),
b) Messen des Werts (Iₐ) des Motorstroms (I),
c) Vergleichen des Messwerts (Iₐ) des Motorstroms (I) mit einem Nennwert (Iₙ) des Motorstroms (I) für den Wert (vₐ) der Drehzahl (v),
d) Konstanthalten des Werts (vₐ) der Drehzahl (v), falls der Messwert (Iₐ) des Motorstroms von dem Nennwert (Iₙ) des Motorstroms abweicht,
e) andernfalls Ändern des Werts (vₐ) der Drehzahl (v) und Fortsetzen mit Schritt b).

2. Verfahren nach Anspruch 1, bei dem
- in Schritt a) mit einem niedrigen Wert (vₗ) der Drehzahl (v) begonnen wird,
- in Schritt d) der Wert (vₐ) der Drehzahl (v) konstantgehalten wird, falls der Messwert (I_{c}) des Motorstroms den Nennwert (Iₙ) des Motorstroms übersteigt, und
- in Schritt e) der Wert (vₐ) der Drehzahl (v) erhöht wird.

3. Verfahren nach Anspruch 1, bei dem
- in Schritt a) mit einem Maximalwert (v₂) der Drehzahl (v) begonnen wird,
- in Schritt d) der Wert (vₐ) der Drehzahl (v) konstantgehalten wird, falls der Messwert (Iₐ) des Motorstroms unter den Nennwert (In) des Motorstroms fällt, und
- in Schritt e) der Wert (vₐ) der Drehzahl (v) verringert wird.

4. Verfahren nach Anspruch 1, bei dem
- in Schritt a) mit einem mittleren Wert (v₃) der Drehzahl (v) begonnen wird,
- in Schritt e) der Wert (vₐ) der Drehzahl (v) verringert wird, falls der Vergleich von Schritt c) zeigt, dass der Messwert (Iₐ) des Motorstroms den Nennwert (In) des Motorstroms übersteigt,
- in Schritt e) der Wert (vₐ) der Drehzahl (v) erhöht wird, falls der Vergleich des Schritts c) zeigt, dass der Messwert (Iₐ) des Motorstroms unter den Nennwert (In) des Motorstroms fällt,
- andernfalls der Wert der Drehzahl (v) konstantgehalten wird.

5. Verfahren nach einem der vorhergehenden Ansprüche, **dadurch gekennzeichnet, dass** der Wert der Drehzahl (v) konstantgehalten wird, falls der derzeitige Wert (vₐ) der Drehzahl gleich einem Maximalwert (vₘ) der Drehzahl (v) der Vorrichtung ist.

6. Verfahren nach einem der vorhergehenden Ansprüche, bei dem das Messen des Werts des Motorstroms (Iₐ) das Messen mehrerer Abtastwerte (Iₐₙ) des Motorstroms (I) und das Erzeugen eines Mittelwerts daraus enthält.

7. Verfahren nach einem der vorhergehenden Ansprüche, bei dem in Schritt d) der Wert der Drehzahl (v) um einen bestimmten Betrag (dv) verringert wird, bevor er konstantgehalten wird.

8. Verfahren nach einem der vorhergehenden Ansprüche, **dadurch gekennzeichnet, dass** der Nennwert (In) des Motorstroms (I) für einen bestimmten Wert (vₐ) der Drehzahl der maximal ratsame Wert des Motorstroms (I) für den bestimmten Wert der Drehzahl (v) ist.

9. verfahren zum Überwachen und Einstellen einer Drehzahl (v) in einem Plattenlaufwerk zum Optimieren eines Motorstroms (I) einer Platte (50), die durch einen Motor (55) mit der Drehzahl (v) angetrieben wird, wobei das verfahren die folgenden Schritte umfasst:
a) Ansteuern des Motors (55) bei einem bestimmten Wert (Iₐ) des Motorstroms (I),
b) Messen des Werts (vₐ) der Drehzahl (v),
c) vergleichen des Messwerts (vₐ) der Drehzahl (v) mit einem Nennwert (vₙ) der Drehzahl (v) für den Wert (Iₐ) des Motorstroms (I),
d) Konstanthalten des Werts (Iₐ) des Motorstroms (I), falls der Messwert (vₐ) der Drehzahl von dem Nennwert (vₙ) der Drehzahl abweicht,
e) andernfalls Ändern des Werts (Iₐ) des Motorstroms (I) und Fortsetzen mit Schritt b).

10. Verfahren nach Anspruch 9, bei dem
- in Schritt a) mit einem niedrigen Wert (I₁) des Motorstroms (I) begonnen wird,
- in Schritt d) der Wert (Iₐ) des Motorstroms (I) konstantgehalten wird, falls der Messwert (vₐ) der Drehzahl unter den Nennwert (vₙ) der Drehzahl fällt, und
- in Schritt e) der Wert (Tₐ) des Motorstroms (I) erhöht wird.

11. Verfahren nach Anspruch 9, bei dem
- in Schritt a) mit einem Maximalwert (I₂) des Motorstroms (I) begonnen wird,
- in Schritt d) der Wert (Iₐ) des Motorstroms (I) konstantgehalten wird, falls der Messwert (vₐ) der Drehzahl den Nennwert (vₙ) der Drehzahl übersteigt, und
- in Schritt e) der Wert (Iₐ) des Motorstroms (I) verringert wird.

12. Verfahren nach Anspruch 9, bei dem
- in Schritt a) mit einem mittleren Wert (I₃) des Motorstroms (I) begonnen wird,
- in Schritt e) der Wert (Iₐ) des Motorstroms (I) verringert wird, falls der Vergleich des Schritts c) zeigt, dass der Messwert (vₐ) der Drehzahl unter den Nennwert (vₙ) der Drehzahl fällt,
- in Schritt e) der Wert (Iₐ) des Motorstroms (I) erhöht wird, falls der Vergleich des Schritts c) zeigt, dass der Messwert (vₐ) der Drehzahl den Nennwert (vₙ) der Drehzahl übersteigt,
- andernfalls der Wert des Motorstroms (I) konstantgehalten wird.

13. Verfahren nach einem der Ansprüche 9 bis 12, **dadurch gekennzeichnet, dass** der Wert des Motorstroms (I) konstantgehalten wird, falls der derzeitige Wert (Iₐ) des Motorstroms gleich einem Maximalwert (Im) des Motorstroms (I) der Vorrichtung ist.

14. Verfahren nach einem der Ansprüche 9 bis 13, bei dem das Messen des Werts der Drehzahl (vₐ) das Messen mehrerer Abtastwerte (vₐₙ) der Drehzahl (v) und das Erzeugen eines Mittelwerts daraus enthält.

15. Verfahren nach einem der Ansprüche 9 bis 14, bei dem in Schritt d) der Wert des Motorstroms (I) um einen bestimmten Betrag (dI) verringert wird, bevor er konstantgehalten wird.

16. verfahren nach einem der Ansprüche 9 bis 15, **dadurch gekennzeichnet, dass** der Nennwert (vₙ) der Drehzahl (v) für einen bestimmten Wert (Iₐ) des Motorstroms der maximal ratsame Wert der Drehzahl (v) für den bestimmten Wert des Motorstroms (I) ist.

## Revendications

1. Procédé de contrôle et de réglage du courant du moteur (I) dans un appareil d'entraînement de disque pour l'optimisation de la vitesse de rotation (v) d'un disque (50) entraîné par un moteur (55) étant entraîné par ledit courant du moteur (I), procédé comprenant les étapes suivantes :
a) entraînement du moteur (55) à une certaine valeur (vₐ) de la vitesse de rotation (v),
b) mesure de la valeur (Iₐ) du courant du moteur (I),
c) comparaison de la valeur mesurée (Iₐ) du courant du moteur (I) avec une valeur nominale (Iₙ) du courant du moteur (I) pour ladite valeur (vₐ) de ladite vitesse de rotation (v),
d) maintien de la valeur (vₐ) de la vitesse de rotation (v) à une valeur constante si la valeur mesurée (Iₐ) du courant du moteur varie par rapport à la valeur nominale (Iₙ) du courant du moteur,
e) ou changement de la valeur (vₐ) de la vitesse de rotation (v) en continuant avec l'étape b).

2. Procédé selon la revendication 1, dans lequel
- à l'étape a) le départ est effectué à une valeur faible (v₁) de la vitesse de rotation (v),
- à l'étape d) la valeur (vₐ) de la vitesse de rotation (v) est maintenue à une valeur constante si la valeur mesurée (Iₐ) du courant du moteur dépasse la valeur nominale (In) du courant du moteur, et
- à l'étape e) la valeur (vₐ) de la vitesse de rotation (y) est augmentée.

3. Procédé selon la revendication 1, dans lequel
- à l'étape a) le départ est effectué à une valeur maximale (v2) de la vitesse de rotation (v),
- à l'étape d) la valeur (vₐ) de la vitesse de rotation (v) est maintenue à une valeur constante si la valeur mesurée (Iₐ) du courant du moteur descend en-dessous de la valeur nominale (In) du courant du moteur, et
- à l'étape e) la valeur (vₐ) de la vitesse de rotation (v) est diminuée.

4. Procédé selon la revendication 1, où
- à l'étape a) le départ est effectué à une valeur moyenne (v₃) de la vitesse de rotation (v),
- si la comparaison à l'étape c) révèle que la valeur mesurée (Iₐ) du courant du moteur dépasse la valeur nominale (Iₙ) du courant du moteur, alors à l'étape e) la valeur (vₐ) de la vitesse de rotation (v) est diminuée,
- si la comparaison à l'étape c) révèle que la valeur mesurée (Iₐ) du courant du moteur descend en-dessous de la valeur nominale (Iₙ) du courant du moteur, alors à l'étape e) la valeur (vₐ) de la vitesse de rotation (v) est augmentée,
- ou la valeur de la vitesse de rotation (v) est maintenue à une valeur constante.

5. Procédé selon l'une quelconque des revendications précédentes, **caractérisé en ce que** la valeur de la vitesse de rotation (v) est maintenue à une valeur constante si la valeur actuelle (vₐ) de la vitesse de rotation équivaut à une valeur maximale (vₘ) de la vitesse de rotation (v) du dispositif.

6. Procédé selon l'une quelconque des revendications précédentes, dans lequel la mesure de la valeur du courant du moteur (lₐ) comprend la mesure de plusieurs échantillons (Iₐₙ) du courant du moteur (I) et la génération d'une valeur moyenne à partir de ces derniers.

7. Procédé selon l'une quelconque des revendications précédentes, dans lequel à l'étape d) la valeur de la vitesse de rotation (v) est réduite d'un certain degré (dv) avant d'être maintenue à une valeur constante.

8. Procédé selon l'une quelconque des revendications précédentes, **caractérisé en ce que** la valeur nominale (Iₙ) du courant du moteur (I) pour une valeur particulière (vₐ) de la vitesse de rotation est la valeur maximale conseillée du courant du moteur (I) pour ladite valeur particulière de ladite vitesse de rotation (v).

9. Procédé de contrôle et de réglage d'une vitesse de rotation (v) dans un appareil d'entraînement de disque pour l'optimisation du courant du moteur (I) d'un disque (50) entraîné par un moteur (55) à l'aide de ladite vitesse de rotation (v), procédé comprenant les étapes suivantes :
a) entraînement du moteur (55) à une certaine valeur (Iₐ) du courant du moteur (I),
b) mesure de la valeur (vₐ) de la vitesse de rotation (v),
c) comparaison de la valeur mesurée (vₐ) de la vitesse de rotation (v) à une valeur nominale (vₙ) de la vitesse de rotation (v) pour ladite valeur (Iₐ) dudit courant du moteur (I),
d) maintien de la valeur (Iₐ) du courant du moteur (I) à une valeur constante si la valeur mesurée (vₐ) de la vitesse de rotation varie par rapport à la valeur nominale (Iₙ) de la vitesse de rotation,
e) ou changement de la valeur (Iₐ) du courant du moteur (I) en poursuivant avec l'étape b).

10. Procédé selon la revendication 9, dans lequel
- à l'étape a) le départ est effectué à une valeur faible (Iₗ) du courant du moteur (I),
- à l'étape d) la valeur (Iₐ) du courant du moteur (I) est maintenue à une valeur constante si la valeur mesurée (vₐ) de la vitesse de rotation descend en-dessous de la valeur nominale (vₙ) de la vitesse de rotation, et
- à l'étape e) la valeur (Iₐ) du courant du moteur (I) est augmentée.

11. Procédé selon la revendication 9, dans lequel
- à l'étape a) le départ est effectué à une valeur maximale (I₂) du courant du moteur (I),
- à l'étape d) la valeur (Iₐ) du courant du moteur (I) est maintenue à une valeur constante si la valeur mesurée (vₐ) de la vitesse de rotation dépasse la valeur nominale (vₙ) de la vitesse de rotation, et
- à l'étape e) la valeur (Iₐ) du courant du moteur (I) est diminuée.

12. Procédé selon la revendication 9, dans lequel
- à l'étape a) le départ est effectué à une valeur moyenne (I₃) du courant du moteur (I),
- si la comparaison à l'étape c) révèle que la valeur mesurée (vₐ) de la vitesse de rotation descend en-dessous de la valeur nominale (vₙ) de la vitesse de rotation, alors à l'étape e) la valeur du courant (Iₐ) du moteur (I) est diminuée,
- si la comparaison à l'étape c) montre que la valeur mesurée (vₐ) de la vitesse de rotation dépasse la valeur nominale (vₙ) de la vitesse de rotation, alors à l'étape e) la valeur (Iₐ) du courant du moteur (I) est augmentée,
- ou la valeur du courant du moteur (I) est maintenue à une valeur constante.

13. Procédé selon l'une quelconque des revendications 9 à 12, **caractérisé en ce que** la valeur du courant du moteur (I) est maintenue à une valeur constante si la valeur réelle (Iₐ) du courant du moteur équivaut à une valeur maximale (Iₘ) du courant du moteur (I) du dispositif.

14. Procédé selon l'une quelconque des revendications 9 à 13, dans lequel la mesure de la valeur de la vitesse de rotation (vₐ) comprend la mesure de plusieurs échantillons (vₐₙ) de la vitesse de rotation (v) et la génération d'une valeur moyenne à partir de ces derniers,

15. Procédé selon l'une quelconque des revendications 9 à 14, dans lequel à l'étape d) la valeur du courant du moteur (I) est diminuée d'une certaine valeur (dI) avant d'être maintenue à une valeur constante.

16. Procédé selon l'une quelconque des revendications 9 à 15, **caractérisée en ce que** la valeur nominale (vₙ) de la vitesse de rotation (v) pour une certaine valeur (Iₐ) du courant du moteur est la valeur maximale recommandée de la vitesse de rotation (v) pour ladite certaine valeur dudit courant du moteur (I).
